# EUROPEAN PATENT APPLICATION

(11) **EP 1 113 309 A2**
(43) Date of publication of application: **04.07.2001**
(21) Application number: 00128360.5
(22) Date of filing: 22.12.2000
(51) Int. Cl.: G02F 1/13357

(54) **Colored back light device in liquid crystal display module**

(30) Priority: 31.12.1999 KR 6826699
(71) Applicant: Samsung Electronics Co., Ltd., Suwon-city, Kyungki-do (KR)
(72) Inventor: Jeong, Byeong-Ro, c/o Samsung Electronics Co. Ltd., Pundang-Gu, Sungnam-Shi, Kyunggi-Do (KR)
(74) Representative: Grünecker, Kinkeldey, Stockmair & Schwanhäusser Anwaltssozietät

(57) **Abstract**

Disclosed is a back light in a liquid crystal display (LCD) module, in particular, a back light device in a LCD module for irradiating light in a variety of colors according to a user's demand. The back light device in the liquid crystal display module includes a liquid crystal display, a reflecting plate laminated sheet by sheet on a bottom of the liquid crystal display, one or more lamps installed on one end of the reflecting plate, and a controller for controlling light emission of the installed lamps. The lamps are installed on both ends of the reflecting plate to combine colors. The light emitted by the lamps is diffused through the reflecting plate. The diffused light is irradiated according to an illumination control signal applied by the controller. The illumination control signal causes the irradiated light to have a pertinent color according to the user's demand.

## Description

The present invention generally relates to a back light device in a liquid crystal display (LCD) module, and in particular, to a back light device in a liquid crystal display module for irradiating light in various colors according to a demand by a user.

In general, a liquid crystal display module means a device used in a small-sized information equipment to display information. The typical liquid crystal display module as currently produced is a display monitor for a small television set, a mobile telecommunication set, or the like.

A problem, however, encountered in the liquid crystal display module of the related art is that a user can not see the displayed information in a dark place due to its original characteristics. Thus, an additional illuminating device referred to as a back light device is housed in the liquid crystal display module, so that a user can see the displayed information even in the dark place owing to the operation of the housed illuminating device.

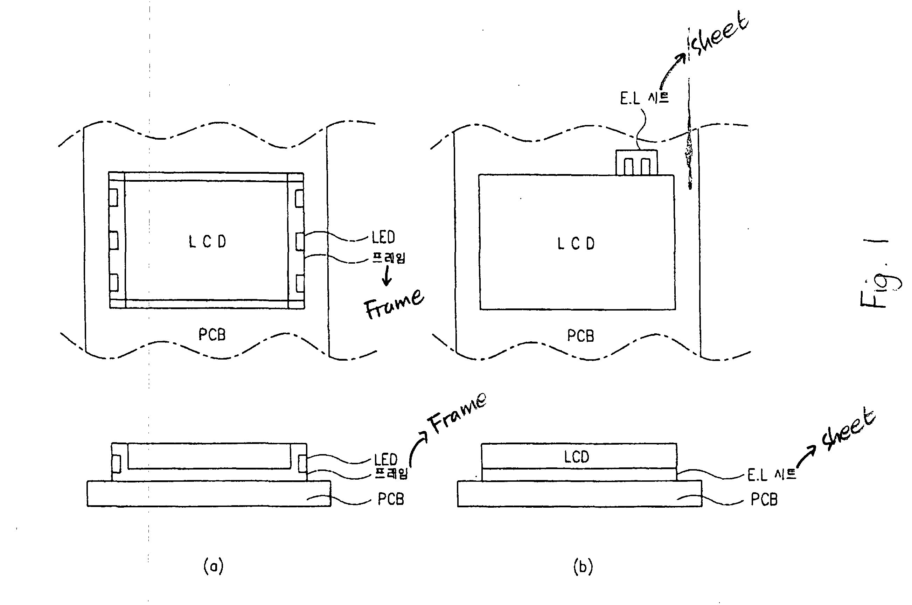

FIG. 1 is a schematic view illustrating an inside structure of the liquid crystal display module in the related art. A mark (a) represents a case where a back light device is realized as a lamp element of light emitting diode (LED) or the like, while a mark (b) represents a case where a back light device is realized as an E.L. sheet currently developed. Most presently used as the liquid crystal display module have such a structure as shown in FIG. 1, respectively. In particular, the structure of the liquid crystal display module in FIG. 1 is a representative illustration applied as a display monitor for a mobile telecommunication set widely used at present.

In the meantime, it is found the back light device in the liquid crystal display module as shown in FIG. 1 is designed to emit unicolored light. In other words, the back light device in the liquid crystal display module of the related art is fabricated to emit light in a predetermined color irrespective of various taste or requests by users.

With various taste or requests by users, the need is directed to produce the liquid crystal display module capable of emitting light in a variety of colors. However, such a liquid crystal display module to meet the various taste or requests has not been realized yet. There are some liquid crystal display modules designed to emit light with at least one color. Those liquid crystal display modules, in practice, can only select a few among predetermined several colors, still remaining the problem of illumination in an unicolored state.

It is, therefore, the object of the present invention to provide a liquid crystal display (LCD) module, which can combine and emit light having a variety of colors according to a user' request, thereby obviating a limit of the related art in emitting light of various colors.

To achieve the above object, there is provided a back light device in a liquid crystal display module, the device comprising a liquid crystal display, a reflecting plate laminated sheet by sheet on a bottom of the liquid crystal display, one or more lamps installed on one end of the reflecting plate, and a controller for controlling light emission of the lamps. The lamps are installed on both ends of a bottom of the reflecting plate to combine colors. The light emitted by the lamps is diffused through the reflecting plate. The diffused light is irradiated according to an illumination control signal applied by the controller. The illumination control signal is a signal for controlling emission of the light in a pertinent color requested by a user.

The above object, features and advantages of the present invention will become more apparent from the following detailed description when taken in conjunction with the accompanying drawings, in which:
FIG. 1 is a diagram illustrating a back light device in a liquid crystal display module of a related art; and
FIG. 2 is a diagram illustrating a back light device in a liquid crystal display module according to a preferred embodiment of the present invention.

A preferred embodiment of the present invention will be described herein below with reference to the accompanying drawings. As for reference numbers, it should be noted that the same reference numbers are attached to the same elements, and explanation thereof is omitted. In the following description, well-known functions or constructions are not described in detail since they would obscure the invention in unnecessary detail. A liquid crystal display module illustrated below is a preferred embodiment applied to a mobile telecommunication set. It is desired that the liquid crystal display module according to the present invention invokes the most desirable effect when applied to the mobile telecommunication set.

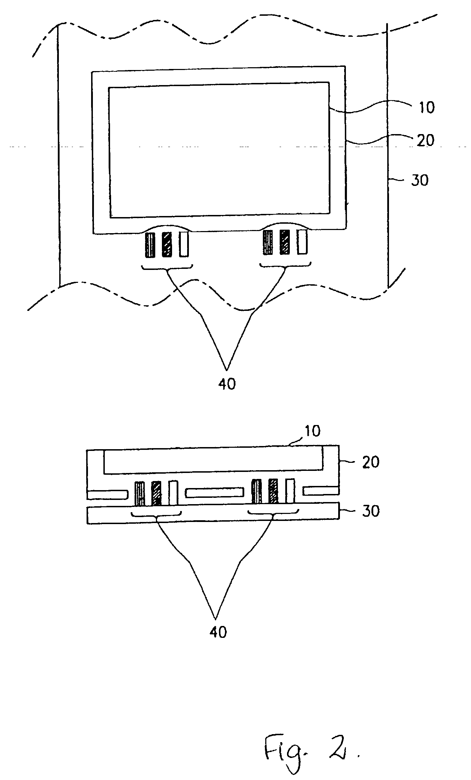

A structure of the liquid crystal display module comprising a back light device will be described herein below with reference to FIG.2.

FIG. 2 is a diagram illustrating the colored back light device in the liquid crystal display module according to the preferred embodiment of the present invention.

Referring to FIG. 2, reference number 10 represents a liquid crystal display, shortly named LCD, where actual information is displayed by an effect of a liquid crystal. To be specific, the information is displayed under a control by a controller in the applied mobile telecommunication set.

Reference number 20 is a back light plate laminated and mounted on a bottom of the liquid crystal display 10. The back light plate is referred to as a reflecting plate in other word. The back light plate allows illuminated light of a lamp discussed below to be diffused, so that the displayed information on the liquid crystal display can be seen in a dark state. The back light plate has a frame installed on the edge thereof to protect sides of the liquid crystal display, with inside of the frame mounting the liquid crystal display thereon. The back light plate is made of diffuse acryl to diffuse the illuminated light.

Reference number 30 represents a printed circuit board (PCB) where the liquid crystal display module is mounted according to the present invention. The printed circuit board supplies a control signal and an electric power necessary for driving the liquid crystal display module. Further, the printed circuit board has various sorts of elements mounted thereon, which are needed for an operation of the mobile telecommunication set. A lamp light emitting diode (LED) in the back light device discussed below is also mounted on the printed circuit board according to the present invention.

Reference number 40 represents the lamp installed on the printed circuit board in both ends of the bottom of the reflecting plate. The lamp comprises LEDs for emitting different colored light, respectively. The lamp according to the present invention comprises LEDs for red, yellow, and blue color so as to display various colors by their combination. Each LED for a different color is selected to emit light of a pertinent color based on a user's request. The illumination of the LED is conducted according to a control signal applied by a controller in the mobile telecommunication set, and the application of the control signal is performed according to the user's demand.

The operation of the liquid crystal display module having the structure as shown in FIG.2 will be described herein below.

If a user requests the back light in the liquid crystal display module be red colored, a control signal for causing only a LED for the red color to emit light is applied to the liquid crystal display module. Thus, only the LED for the red color among the LEDs installed on the both ends of the bottom of the reflecting plate emits light, which is then diffused through the reflecting plate.

If the user requests the yellow color with respect to the back light, a LED for the yellow color only emits light, whereas with a request of the blue color, only a LED for a blue color accordingly emits light. Furthermore, if there is a request of another color than the aforementioned three colors, the operation of the LEDs is properly controlled to emit the requested colored light. For example, if the user wants to have orange colored light, the LED R and LED Y are simultaneously controlled to emit their light. The emitted light by the LED R and LED Y is diffused in the reflecting plate at the same time, rendering the emitted light orange colored as a result. On the same principle, the LED Y and B are controlled to simultaneously emit their light when there is a request of a violet colored light. In case of another color than those illustrated, a proper selection of the LEDs and an illumination control accordingly may help induce a desired colored back light.

The operation of the liquid crystal display module will be carried out as shown in the following.

In a typical mobile telecommunication set, an entry into a menu is accomplished by an input of a menu key according to an additional function or others. If there is an input of the menu key in the mobile telecommunication set applied in the present invention, the menu for a back light color variation mode is displayed on a monitor. If the menu selected, the mobile telecommunication set is programmed to enter into the back light color variation mode. If the back light color variation mode selected, the mobile telecommunication set is also programmed so as for a user to select a desired color for the back light by inputting a predetermined orientation key. Thus, the user can select the color of the back light, which is predetermined or combined according to his/her demand, by inputting the orientation key. Hence, the LEDs are controlled to be driven to emit light of the selected color.

It is out of question that the method for controlling the back light color according to the present invention is able to be realized in any other equipments using a liquid crystal display module in conformity with an operational characteristic of the equipments.

## Claims

1. A back light device in a liquid crystal display module, the device comprising:
a liquid crystal display;
a reflecting plate, laminated on a bottom of the liquid crystal display, for diffusing a light;
at least one illuminating lamp for combining and emitting the light of the requested color in the reflecting plate; and
a controller for controlling the lamp to be driven to emit the light in a selected color according to a user's request.

2. The device of claim 1 wherein
the reflecting plate is laminated sheet by sheet; and
a plurality of illuminating lamps is installed on both ends of a bottom of the reflecting plate to combine colors, the light emitted by the lamps is diffused through the reflecting plate, the color combined and diffused light is irradiated according to an illumination control signal applied by the controller, and the illumination control signal causes the irradiated light to have the selected color according to the user's request.

3. The device of claim 1 or 2, wherein the at least one lamp comprises one or more light emitting diodes (LED) installed on both ends of the bottom of the reflecting plate to combine colors.

4. The device of claim 3, wherein each LED emits light of red, yellow, or blue color.

5. The device of claim 4, wherein each LED selectively emits the light color by the controller.
